(19) Europäisches Patentamt
European Patent Office
Office européen des brevets

(11) Veröffentlichungsnummer: **0 043 561**
**B1**

(12) # EUROPÄISCHE PATENTSCHRIFT

(45) Veröffentlichungstag der Patentschrift: **04.04.84**

(51) Int. Cl.³: **C 09 B 62/517,** D 06 P 3/66, D 06 P 3/10

(21) Anmeldenummer: **81105136.6**

(22) Anmeldetag: **02.07.81**

(54) **Wasserlösliche Phthalocyaninverbindungen, Verfahren zu ihrer Herstellung und ihre Verwendung als Farbstoffe.**

(30) Priorität: **08.07.80 DE 3025790**

(43) Veröffentlichungstag der Anmeldung: **13.01.82 Patentblatt 82/2**

(45) Bekanntmachung des Hinweises auf die Patenterteilung: **04.04.84 Patentblatt 84/14**

(84) Benannte Vertragsstaaten: **BE CH DE FR GB IT LI**

(56) Entgegenhaltungen:
**EP - A - 0 024 676**
**EP - A - 0 024 677**
**DE - A - 1 569 823**
**FR - A - 2 140 564**
**GB - A - 796 697**

(73) Patentinhaber: **HOECHST AKTIENGESELLSCHAFT, Postfach 80 03 20, D-6230 Frankfurt am Main 80 (DE)**

(72) Erfinder: **Springer, Hartmut, Dr., Am Erdbeerstein 27, D-6240 Königstein/Taunus (DE)**

EP 0 043 561 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Wasserlösliche Phthalocyaninverbindungen, Verfahren zu ihrer Herstellung und ihre Verwendung als Farbstoffe

Aus der DE-PS 1 179 317 sind faserreaktive, sulfogruppenhaltige Phthalocyaninfarbstoffe bekannt, die einen bis drei an den Phthalocyaninkern über Sulfonamidgruppen gebundene aromatische Reste mit einer $\beta$-Sulfatoäthylsulfonyl- oder Vinylsulfonylgruppe enthalten. Weiterhin sind aus der DE-PS 1 283 997 faserreaktive, gegebenenfalls sulfogruppenhaltige Phthalocyaninfarbstoffe bekannt, bei denen im Vergleich zu den Phthalocyaninfarbstoffen der oben erwähnten DE-PS 1 179 317 die am Phthalocyaninkern befindlichen Sulfogruppen ganz oder teilweise durch gegebenenfalls durch Alkyl- und/oder Arylgruppen substituierte, an den Phthalocyaninkern gebundene Sulfonamidgruppen ersetzt sind. Die Phthalocyaninfarbstoffe der DE-PS 1 283 997 besitzen gegenüber den erst erwähnten Phthalocyaninfarbstoffen teilweise verbesserte färberische Eigenschaften, jedoch im allgemeinen auch eine geringere Löslichkeit, da die Gesamtzahl der Substituenten, die in einfacher Weise in das Phthalocyaninmolekül über den Weg der Sulfierung bzw. Sulfochlorierung eingeführt werden können, höchstens 4 beträgt.

Mit der vorliegenden Erfindung wurden nunmehr neue Phthalocyaninverbindungen gefunden, die außer sehr guten färberischen Eigenschaften auch optimale Löslichkeiten besitzen. Die gute Löslichkeit dieser neuen Verbindungen beruht auf der in ihnen ein- oder mehrmals enthaltenen Sulfonylcyanamidgruppe. Diese Gruppe ist einerseits als substituierte Sulfonamidgruppe aufzufassen, andererseits besitzt sie ein stark saures Wasserstoffatom und somit als anionische Gruppierung eine gute löslichmachende Wirkung. Die Wasserlöslichkeit der erfindungsgemäßen neuen Phthalocyaninverbindungen ist somit nicht an das Vorhandensein von Sulfogruppen gebunden.

Die neuen Phthalocyaninverbindungen besitzen in saurer Form und in Form ihrer Salze die allgemeine Formel (1)

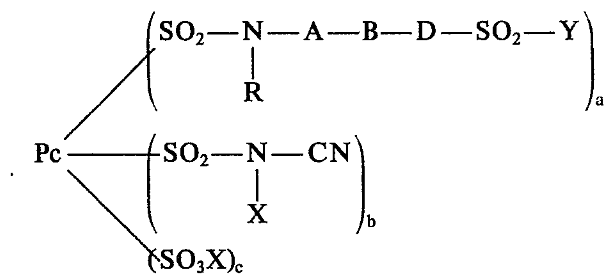

(1)

in welcher bedeuten:

Pc ist der Rest des Kupfer-, Kobalt- oder Nickelphthalocyanins, wobei der Phthalocyaninrest noch in den 3- und/oder 4-Stellungen der carbocyclischen aromatischen Ringe des Phthalocyanins durch Chlor oder Phenyl substituiert sein kann und in welchem die Sulfonylcyanamid-, Sulfonamid- und/oder Sulfonsäure-Gruppen in 3- und/oder 4-Stellungen der carbocyclischen aromatischen Ringe des Phthalocyanins gebunden sind;
a ist eine ganze oder gebrochene Zahl von 1 bis 3;
b ist eine ganze oder gebrochene Zahl von 1 bis 3;
c ist eine ganze oder gebrochene Zahl von Null bis 2,

wobei a, b und c gleich oder verschieden voneinander sein können, jedoch die Summe von $(a+b+c)$ gleich einer ganzen oder gebrochenen Zahl von 2 bis 4 ist;

R ist ein Wasserstoffatom oder eine Alkylgruppe von 1 bis 4 C-Atomen;
A ist eine direkte Bindung oder eine Gruppe der allgemeinen Formeln

$$-(CH_2)_m- \text{ oder } -(CH_2)_n-NH-,$$

in welchen m eine ganze Zahl von 1 bis 4 und n eine ganze Zahl von 2 bis 6 ist;
B ist der Phenylen- oder Naphthylenrest, die durch Substituenten, bevorzugt 1 bis 3 Substituenten, aus der Gruppe Alkyl von 1 bis 4 C-Atomen, wie Methyl und Äthyl, Alkoxy von 1 bis 4 C-Atomen, wie Methoxy und Äthoxy, Halogen, wie Chlor und Brom, Carboxy, Sulfo, Carbamoyl, Sulfamoyl, Alkylsulfonyl von 1 bis 4 C-Atomen, Carbalkoxy von 2 bis 5 C-Atomen, Acetylamino und Nitro substituiert sein können;
D ist eine direkte Bindung oder ein Rest der Formeln

$$-CH_2- \text{ oder } -CH_2-CH_2-;$$

Y ist die Vinylgruppe oder die β-Sulfatoäthyl-, β-Phosphatoäthyl-, β-Thiosulfatoäthyl-, β-Hydroxyäthyl- oder β-Chloräthyl-Gruppe;

X ist Wasserstoff oder das Äquivalent eines ein-, zwei- oder dreiwertigen Metalls, vorzugsweise des Natriums oder Kaliums.

Die neuen Verbindungen der Formel (1) sind, wenn X für ein Wasserstoffatom steht, auch im Falle von c = Null saure Verbindungen, da der Aminorest in der Sulfonylcyanamidgruppierung so stark polarisiert ist, daß das Wasserstoffatom der Aminogruppe als Proton reagiert und leicht durch andere salzbildende Kationen, wie Natrium- und Kaliumionen, austauschbar ist.

Die erfindungsgemäßen Phthalocyaninverbindungen sind nur in Ausnahmefällen einheitliche Verbindungen, deren Zusammensetzung durch die allgemeine Formel (1) wiedergegeben wird, in welcher die Indizes a, b und c ganze Zahlen darstellen. In den meisten Fällen handelt es sich um Mischungen, in denen die Indizes a, b und c Durchschnittswerte sind und auch gebrochene Zahlen sein können. Die einzelnen Mischungsbestandteile sind aber stets Verbindungen mit ganzzahligen Indizes.

Bevorzugte erfindungsgemäße Phthalocyaninverbindungen entsprechend der allgemeinen Formel (1) sind solche der allgemeinen Formel (2)

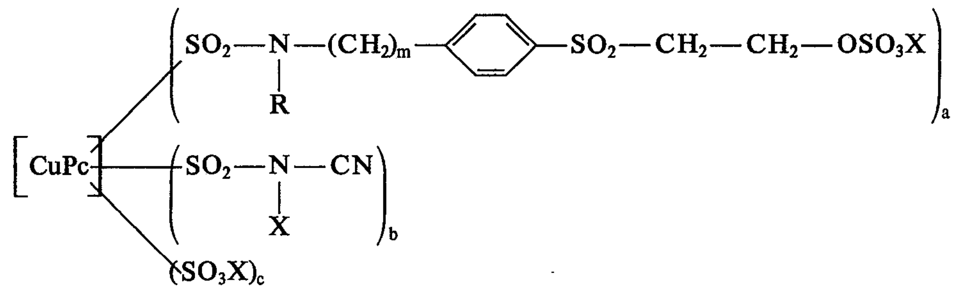

(2)

in welcher CuPc den Rest des Kupferphthalocyanins bedeutet, in welchem die Sulfonylcyanamid-, Sulfonamid- und/oder Sulfonsäuregruppen in den 3- und/oder 4-Stellungen der carbocyclischen aromatischen Ringe des Phthalocyanins gebunden sind, R, X und m einen der obengenannten Bedeutungen haben und a, b und c mit der Summe von 2 bis 4 eine der nachfolgenden Gruppierungen (2a) bis (2e) besitzen:

| | | | |
|---|---|---|---|
| (2a): | a = 1, | b = 3, | c = 0; |
| (2b): | a = 2, | b = 2, | c = 0; |
| (2c): | a = 1, | b = 2, | c = 1; |
| (2d): | a = 2, | b = 1, | c = 1; |
| (2e): | a = 3, | b = 1, | c = 0. |

Die vorliegende Erfindung betrifft auch Verfahren zur Herstellung der neuen Verbindungen entsprechend der allgemeinen Formel (1). Die Herstellung kann analog bekannten Verfahrensweisen zur Synthese von sulfonamidgruppenhaltigen, gegebenenfalls sulfogruppenhaltigen Phthalocyaninverbindungen durch Umsetzung von gegebenenfalls sulfogruppenhaltigen Phthalocyaninsulfochloriden mit entsprechenden Aminoderivaten erfolgen, wie analog solchen Verfahrensweisen, die beispielsweise in den oben erwähnten deutschen Patentschriften 1 179 317 und 1 283 997 beschrieben sind. Das erfindungsgemäße Verfahren zur Herstellung der erfindungsgemäßen Verbindungen entsprechend der allgemeinen Formel (1) ist dementsprechend dadurch gekennzeichnet, daß man ein Phthalocyaninsulfochlorid der allgemeinen Formel (3)

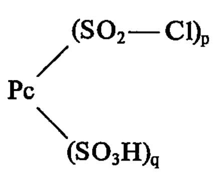

(3)

in welcher Pc die obengenannte Bedeutung besitzt und p für eine ganze oder gebrochene Zahl von 2 bis 4 steht und q für eine ganze oder gebrochene Zahl von Null bis 2 steht, wobei die Summe von (p + q) eine ganze oder gebrochene Zahl von 2 bis 4 ist, mit einem Amin der allgemeinen Formel (4)

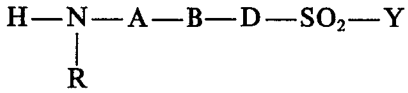

(4)

in welcher R, A, B, D und Y die obengenannten Bedeutungen haben, und mit Cyanamid gleichzeitig

oder in beliebiger Reihenfolge umsetzt.

Die Umsetzung kann in wäßrigem oder wäßrig-organischem Medium bei einem pH-Wert von etwa 4 bis etwa 13, — im Falle, daß das Amin der allgemeinen Formel (4) die für den Formelrest Y stehende $\beta$-Sulfatoäthyl-, $\beta$-Phosphatoäthyl-, $\beta$-Thiosulfatoäthyl- oder $\beta$-Chloräthylgruppe enthält, vorteilhaft bei einem pH-Wert von 6 bis 7, — in Gegenwart eines säurebindenden Mittels und bei einer Temperatur von etwa 0° C bis etwa 80° C, vorzugsweise bei einer Temperatur von 0 bis 40° C erfolgen. Zur Beschleunigung der Reaktion setzt man vorteilhaft tertiäre organische Basen, vorzugsweise Pyridin oder Picolin oder Pyridinderivate, wie beispielsweise Nicotinsäure, zu. Je nach den eingesetzten Mengen der Reaktionskomponenten und den Reaktionsbedingungen reagieren die im Phthalocyaninsulfochlorid enthaltenen Sulfochloridgruppen vollständig mit dem eingesetzten Amin der allgemeinen Formel (4) und mit dem Cyanamid, oder ein Teil von ihnen wird zu Sulfogruppen verseift. Diese Verseifung erfolgt gegebenenfalls entweder parallel zu den ablaufenden Kondensationsreaktionen unter dem Einfluß des wäßrigen Mediums oder sie wird anschließend an diese vorgenommen, gegebenenfalls durch Erhöhung des pH-Wertes oder der Temperatur.

Die erfindungsgemäßen Verbindungen der allgemeinen Formel (1) stellen wertvolle Farbstoffe zum Färben von Materialien aus Cellulose, wie nativer oder regenerierter Cellulose, aus Wolle, Seide oder von Materialien aus synthetischen Polyamidfasern oder von solche Fasern enthaltenden Materialien dar. Die erfindungsgemäßen Verbindungen der allgemeinen Formel (1), in welchen der Formelrest Y für die Vinylgruppe, die $\beta$-Sulfatoäthyl-, die $\beta$-Phosphatoäthyl-, die $\beta$-Thiosulfatoäthyl- oder die $\beta$-Chloräthyl-Gruppe steht, sind zudem als faserreaktive Farbstoffe zum Färben dieser Materialien, insbesondere von Cellulosefasern, verwendbar.

Die vorliegende Erfindung betrifft demgemäß auch die Verwendung der erfindungsgemäßen Verbindungen der allgemeinen Formel (1) als Farbstoffe zum Färben (einschließlich Bedrucken) von cellulosehaltigen Materialien oder von Wolle, Seide oder synthetischen Polyamidfasermaterialien.

Erfindungsgemäße Verbindungen der allgemeinen Formel (1), in welchen der Formelrest Y für die $\beta$-Hydroxyäthylgruppe steht, können in erfindungsgemäßer Weise auch in die entsprechenden Schwefelsäureester- oder Phosphorsäureesterverbindungen mit Y gleich der $\beta$-Sulfatoäthyl- bzw. $\beta$-Phosphatoäthylgruppe übergeführt werden; diese Veresterungsreaktionen erfolgen analog bekannten Verfahrensweisen der Veresterung mit einem entsprechenden Sulfatierungs- oder Phosphatierungsmittel, wie sie aus der Literatur zahlreich bekannt sind. Bei diesen Veresterungsreaktionen können Nebenreaktionen auftreten, wobei je nach Wahl der Veresterungsbedingungen ein geringer Anteil der Sulfonylcyanamidgruppen bespielsweise in Sulfonylharnstoffgruppen übergeführt oder weiter abgewandelt werden kann. Durch diese Nebenreaktionen wird jedoch die Qualität der erfindungsgemäßen Phthalocyaninverbindungen entsprechend der allgemeinen Formel (1) nicht beeinträchtigt.

Die neuen erfindungsgemäßen Verbindungen lassen sich nach üblichen Applikationsverfahren der Färberei- und Druckereitechnik auf die genannten Materialien aufbringen und analog üblichen und bekannten Verfahrensweisen, vorzugsweise unter Wärmeeinwirkung, auf diese Materialien fixieren. Insbesondere kann man zur Herstellung der Färbungen und Drucke mit den erfindungsgemäßen Phthalocyaninverbindungen nach den in der Technik üblichen und bekannten Applikations- und Fixiermethoden für faserreaktive Farbstoffe vorgehen, wie sie zahlreich in der Literatur beschrieben sind. Bevorzugte Applikations- und Fixierverfahren, insbesondere für das Färben von cellulosehaltigen Fasermaterialien, sind neben der Färbeweise aus langer Flotte die Klotz-Dämpf-Verfahren, die Klotz-Kaltverweil-Verfahren und die Klotz-Thermofixier-Verfahren. Der besondere Wert der erfindungsgemäßen, als Farbstoffe verwendbaren Phthalocyaninverbindungen liegt darin, daß sie nach den üblichen Fixierverfahren in relativ kurzer Zeit fixiert werden. Zudem eignen sie sich in hervorragender Weise zum Färben und Bedrucken von Textilmaterialien aus regenerierten Cellulosefasern.

Mit den neuen Phthalocyaninverbindungen erhält man nach diesen Färbeweisen wertvolle türkisblaue Färbungen und Drucke, die sich durch sehr gute Echtheiten, vor allem durch sehr gute Licht- und Naßechtheiten, wie beispielsweise Wasch-, Schweiß-, Säure- und Alkaliechtheiten, auszeichnen.

Die nachstehenden Beispiele dienen zur Erläuterung der Erfindung. Die Teile sind Gewichtsteile, die Angaben in Prozent beziehen sich auf Gewichtsprozent, sofern nicht anders vermerkt. Gewichtsteile verhalten sich zu Volumenteilen wie Kilogramm zu Liter. Die Formelreste CuPc, NiPc und CoPc bedeuten das unsubstituierte Kupfer-, Nickel- bzw. Kobaltphthalocyanin-Gerüst.

## Beispiel 1

53,1 Teile des Hydrochlorids von 4-($\beta'$-Hydroxyäthylsulfonyl)-1($\beta$-aminoäthyl)-benzol und 8,4 Teile Cyanamid werden in 200 Teilen Wasser gelöst. Diese Lösung wird auf 0° C abgekühlt, und 97 Teile Kupferphthalocyanin-(3)-tetrasulfochlorid werden in Form eines feuchten Filterkuchens unter Rühren eingetragen. Das Reaktionsgemisch wird durch Zugabe von 16,5%iger Natronlauge auf einen pH-Wert von 12 eingestellt und bei 0 bis 5° C gerührt, wobei durch Zutropfen weiterer Natronlauge ein pH-Wert

von 12 gehalten wird. Sobald keine Natronlauge mehr verbraucht wird, ist die Reaktion beendet. Es müssen insgesamt etwa 230 Teile 16,5%iger Natronlauge eingesetzt werden.

Anschließend wird die erhaltene Suspension durch Zugabe von 78 Volumenteilen einer 2n-Salzsäure neutralgestellt, und die ausgeschiedene Verbindung wird abfiltriert und getrocknet. Es werden etwa 144 Teile eines salzhaltigen Produktes erhalten, das, in Form der freien Säure geschrieben, die folgende Zusammensetzung besitzt:

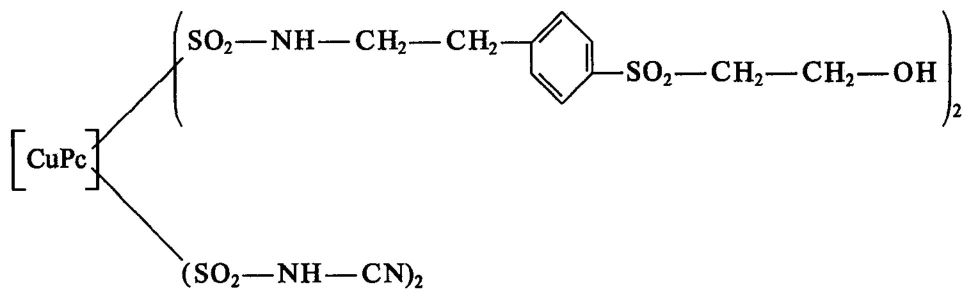

Zur Überführung in die β-Sulfatoäthylsulfonyl-Verbindung wird dieses Produkt unter Rühren in 330 Teile 100%ige Schwefelsäure eingetragen; hierbei soll die Temperatur zur Vermeidung von Nebenreaktionen höchstens auf 50 bis 55°C ansteigen. Es wird sodann eine Stunde bei 50 bis 55°C weiter gerührt. Die danach entstandene klare Lösung wird unverzüglich in etwa 3000 Teile Eis eingerührt. Die ausgeschiedene Verbindung wird abfiltriert und der Filterkuchen in etwa 3000 Teilen Wasser suspendiert; die Suspension wird sodann durch langsame Zugabe von etwa 80 Teilen Natriumhydrogencarbonat auf einen pH-Wert von 5 eingestellt. Es bildet sich eine tiefblaue Lösung, die eingedampft wird. Man erhält aus ihr etwa 200 Teile eines dunkelblauen, elektrolythaltigen Produktes, das die Natriumsalze von Phthalocyaninverbindungen entsprechend der formelmäßigen Zusammensetzung

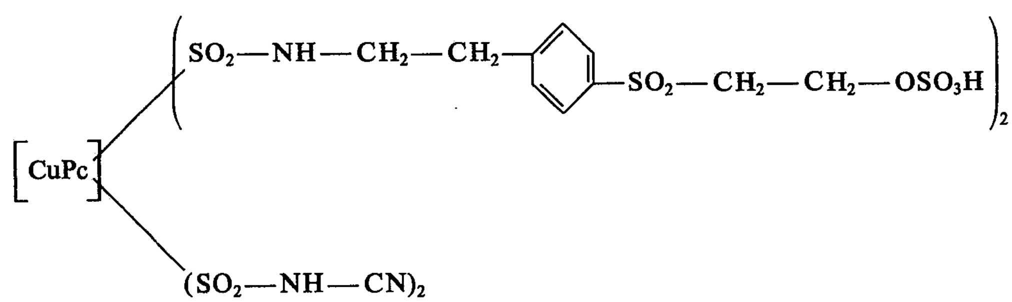

enthält. Dieses Produkt löst sich in Wasser mit blauer Farbe und liefert bei Anwendung nach den für faserreaktive Farbstoffe üblichen und bekannten Applikations- und Fixiermethoden, die insbesondere für schnellfixierende Reaktivfarbstoffe eingesetzt werden, türkisblaue Färbungen und Drucke mit hervorragenden Echtheitseigenschaften, insbesondere sehr guten Licht- und Naßechtheiten, wie beispielsweise Wasch-, Schweiß-, Säure- und Alkaliechtheiten.

Beispiele 2 bis 33

In den nachfolgenden Tabellenbeispielen sind weitere erfindungsgemäße Phthalocyaninverbindungen entsprechend der allgemeinen Formel (1) beschrieben, die in erfindungsgemäßer Weise durch Umsetzung eines Phthalocyaninsulfochlorids mit dem angegebenen Amin entsprechend der allgemeinen Formel (4) und Cyanamid hergestellt werden. Die hierbei durch Variation der eingesetzten Amin- und Cyanamidmengen erhältlichen erfindungsgemäßen Phthalocyaninverbindungen sind in den Tabellenbeispielen durch die Formelglieder der nachstehenden allgemeinen Formel (5)

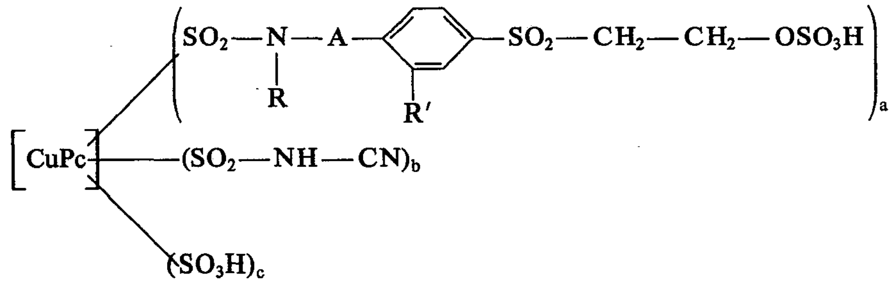

(5)

charakterisiert. Diese Verbindungen der Beispiele 2 bis 33 lassen sich beispielsweise analog der im obigen Ausführungsbeispiel 1 beschriebenen Verfahrensweise herstellen, in dem man bezüglich der Ausgangsverbindungen das verwendete Kupferphthalocyaninsulfochlorid im Sulfonierungsgrad sowie Art und Menge des eingesetzten Amins (4) und die Menge des eingesetzten Cyanamids entsprechend variiert, wie in den Beispielen angegeben.

Diese in den Tabellenbeispielen beschriebenen erfindungsgemäßen Phthalocyaninverbindungen sind ebenfalls sehr gut wasserlöslich und zeigen hervorragende Farbstoffeigenschaften. Mit ihnen können insbesondere Färbungen und Drucke von Baumwolle und Zellwolle nach den für faserreaktive Farbstoffe üblichen Applikations- und Fixiermethoden hergestellt werden, die die im Beispiel 1 genannten guten Echtheitseigenschaften zeigen.

| Bei-spiel | Pc-Sulfochlorid (3) p | q | Amin (4) | Verbindungen entspr. Formel (5) R | A | R' | a | b | c | Farbton der Färbung |
|---|---|---|---|---|---|---|---|---|---|---|
| 2 | 4 | 0 | 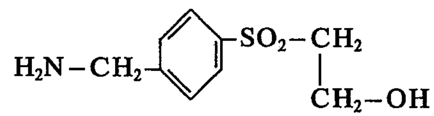 | H | $-CH_2-$ | H | 2 | 2 | 0 | türkisblau |
| 3 | 4 | 0 | desgl. | H | $-CH_2-$ | H | 3 | 1 | 0 | desgl. |
| 4 | 4 | 0 | desgl. | H | $-CH_2-$ | H | 1 | 3 | 0 | desgl. |
| 5 | 3 | 0 | desgl. | H | $-CH_2-$ | H | 2 | 1 | 0 | desgl. |
| 6 | 3 | 0 | desgl. | H | $-CH_2-$ | H | 1 | 2 | 0 | desgl. |
| 7 | 3,5 | 1,5 | desgl. | H | $-CH_2-$ | H | 1 | 2 | 1 | desgl. |
| 8 | 4 | 0 | desgl. | H | $-CH_2-$ | H | 2 | 1 | 1 | desgl. |
| 9 | 2,5 | 0,5 | desgl. | H | $-CH_2-$ | H | 1 | 1 | 1 | desgl. |
| 10 | 3,7 | 0,3 | 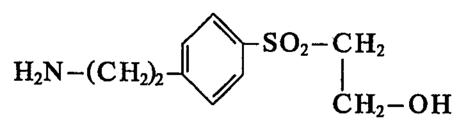 | H | $-(CH_2)_2-$ | H | 2 | 1 | 1 | desgl. |
| 11 | 4 | 0 | desgl. | H | $-(CH_2)_2-$ | H | 1 | 3 | 0 | desgl. |
| 12 | 4 | 0 | desgl. | H | $-(CH_2)_2-$ | H | 1 | 2 | 1 | desgl. |
| 13 | 4 | 0 | desgl. | H | $-(CH_2)_2-$ | H | 3 | 1 | 0 | desgl. |
| 14 | 4 | 0 | desgl. | H | $-(CH_2)_2-$ | H | 1,5 | 1,5 | 1 | desgl. |
| 15 | 4 | 0 | desgl. | H | $-(CH_2)_2-$ | H | 1 | 1 | 2 | desgl. |
| 16 | 3 | 0 | desgl. | H | $-(CH_2)_2-$ | H | 2 | 1 | 0 | desgl. |

Fortsetzung

| Bei-spiel | Pc-Sulfochlorid (3) | | Amin (4) | Verbindungen entspr. Formel (5) | | | | | | Farbton der Färbung |
|---|---|---|---|---|---|---|---|---|---|---|
| | p | q | | R | A | R′ | a | b | c | |
| 17 | 3 | 0 | 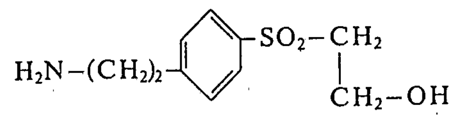 | H | $-(CH_2)_2-$ | H | 1 | 2 | 0 | türkisblau |
| 18 | 2 | 0 | desgl. | H | $-(CH_2)_2-$ | H | 1 | 1 | 0 | desgl. |
| 19 | 4 | 0 | 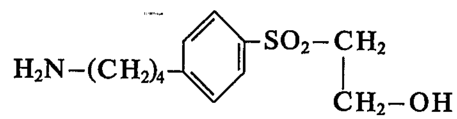 | H | $-(CH_2)_4-$ | H | 2 | 2 | 0 | desgl. |
| 20 | 4 | 0 | desgl. | H | $-(CH_2)_4-$ | H | 2 | 1 | 1 | desgl. |
| 21 | 3 | 0 | desgl. | H | $-(CH_2)_4-$ | H | 2 | 1 | 0 | desgl. |
| 22 | 4 | 0 | 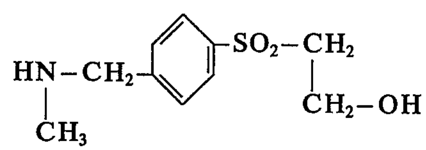 | $-CH_3$ | $-CH_2-$ | H | 2 | 2 | 0 | desgl. |
| 23 | 4 | 0 | desgl. | $-CH_3$ | $-CH_2-$ | H | 2 | 1 | 1 | desgl. |
| 24 | 3 | 0 | desgl. | $-CH_3$ | $-CH_2-$ | H | 2 | 1 | 0 | desgl. |
| 25 | 4 | 0 | 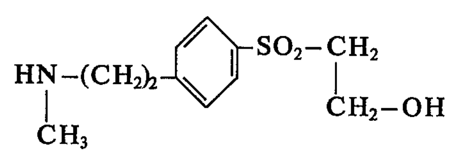 | $-CH_3$ | $-(CH_2)_2-$ | H | 2 | 2 | 0 | desgl. |
| 26 | 4 | 0 | desgl. | $-CH_3$ | $-(CH_2)_2-$ | H | 2 | 1 | 1 | desgl. |
| 27 | 3 | 0 | desgl. | $-CH_3$ | $-(CH_2)_2-$ | H | 2 | 1 | 0 | desgl. |

Fortsetzung

| Beispiel | Pc-Sulfochlorid (3) p | q | Amin (4) | Verbindungen entspr. Formel (5) R | A | R' | a | b | c | Farbton der Färbung |
|---|---|---|---|---|---|---|---|---|---|---|
| 28 | 4 | 0 | 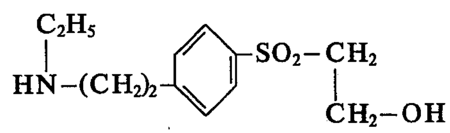 | $-C_2H_5$ | $-(CH_2)_2-$ | H | 2 | 2 | 0 | türkisblau |
| 29 | 4 | 0 | desgl. | $-C_2H_5$ | $-(CH_2)_2-$ | H | 2 | 1 | 1 | desgl. |
| 30 | 3 | 0 | desgl. | $-C_2H_5$ | $-(CH_2)_2-$ | H | 2 | 1 | 0 | desgl. |
| 31 | 4 | 0 | 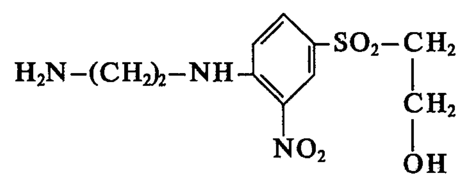 | H | $-(CH_2)_2-NH-$ | $-NO_2$ | 2 | 2 | 0 | grün |
| 32 | 4 | 0 | desgl. | H | desgl. | $-NO_2$ | 2 | 1 | 1 | grün |
| 33 | 3 | 0 | desgl. | H | desgl. | $-NO_2$ | 2 | 1 | 0 | grün |

## Beispiel 34

61,8 Teile 4-(β′-Sulfatoäthylsulfonyl)-1-(β-aminoäthyl)-benzol, das durch Umsetzung des Hydrochlorids von 4-(β-Hydroxyäthylsulfonyl)-1-(β-aminoäthyl)-benzol (s. Beispiel 1) mit konzentrierter Schwefelsäure erhalten wurde, werden zusammen mit 8,4 Teilen Cyanamid und 12,3 Teilen Pyridin-3-carbonsäure in 500 Teilen Wasser verrührt. In die erhaltene Suspension trägt man 97 Tl. Kupferphthalocyanin-(3-tetrasulfochlorid in Form eines feuchten Filterkuchens unter Rühren ein. Das Reaktionsgemisch wird dann durch Zugabe von Natriumhydrogencarbonat auf einen pH-Wert von 6,5 gestellt und auf 50° C erwärmt. Bei der nun beginnenden Kondensationsreaktion wird der pH-Wert von 6,5 mittels Natriumhydrogencarbonat gehalten. Nach einer Reaktionszeit von etwa 5 Stunden bleibt der pH-Wert von selbst konstant, und die Reaktion ist beendet. Es werden etwa 74 Teile Natriumhydrogencarbonat verbraucht. Die erhaltene tiefblaue Lösung wird auf 20° C abgekühlt, und die gebildete erfindungsgemäße Verbindung durch Aussalzen isoliert. Nach Abfiltrieren und Trocknen erhält man ein salzhaltiges Produkt, das die Natriumsalze der erfindungsgemäßen Verbindung entsprechend der formelmäßigen Zusammensetzung

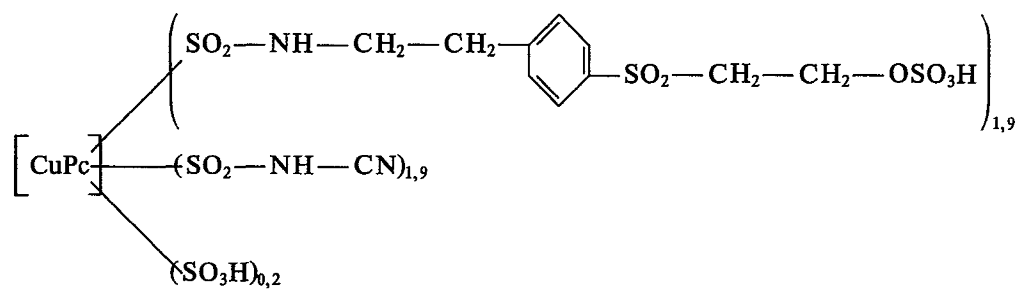

enthält. Sie lösen sich mit blauer Farbe in Wasser und zeigen sehr gute Farbstoffeigenschaften. Bei der Anwendung von in der Technik üblichen Applikations- und Fixierverfahren für faserreaktive Farbstoffe, insbesondere von solchen für schnellfixierende Reaktivfarbstoffe, liefern sie auf Baumwolle und Zellwolle türkisblaue Färbungen und Drucke mit den im Beispiel 1 angegebenen hervorragenden Echtheiten.

## Beispiele 35 bis 45

In den nachfolgenden Tabellenbeispielen sind weitere erfindungsgemäße Phthalocyaninverbindungen entsprechend der allgemeinen Formel (1) beschrieben, die in erfindungsgemäßer Weise durch Umsetzung eines Phthalocyaninsulfochlorids mit dem angegebenen Amin entsprechend der allgemeinen Formel (4) und Cyanamid hergestellt werden. Die hierbei durch Variation der eingesetzten Amin- und Cyanamidmengen erhältlichen erfindungsgemäßen Phthalocyaninverbindungen sind in den Tabellenbeispielen durch die Formelglieder der nachstehenden allgemeinen Formel (6)

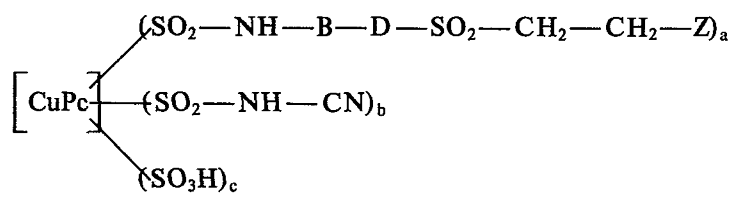

(6)

charakterisiert. Diese Verbindungen der Beispiele 35 bis 45 lassen sich beispielsweise analog der im obigen Ausführungsbeispiel 34 beschriebenen Verfahrensweise herstellen, in dem man bezüglich der Ausgangsverbindungen das verwendete Kupferphthalocyaninsulfochlorid im Sulfonierungsgrad sowie Art und Menge des eingesetzten Amins (4) und die Menge des eingesetzten Cyanamids entsprechend variiert, wie in den Beispielen angegeben.

Diese in den Tabellenbeispielen beschriebenen erfindungsgemäßen Phthalocyaninverbindungen sind ebenfalls sehr gut wasserlöslich und zeigen hervorragende Farbstoffeigenschaften. Mit ihnen können insbesondere Färbungen und Drucke von Baumwolle und Zellwolle nach den für faserreaktive Farbstoffe üblichen Applikations- und Fixiermethoden hergestellt werden, die die im Beispiel 1 genannten guten Echtheitseigenschaften zeigen.

| Beispiel | Pc-Sulfochlorid (3) p | Pc-Sulfochlorid (3) q | Amin (4) | Verbindungen entspr. Formel (6) B | D | Z | a | b | c | Farbton der Färbung |
|---|---|---|---|---|---|---|---|---|---|---|
| 35 | 4 | 0 | 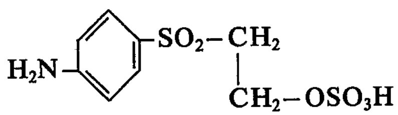 | 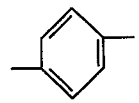 | direkte Bindung | $-OSO_3H$ | 1,5 | 1,5 | 1 | türkisblau |
| 36 | 4 | 0 | 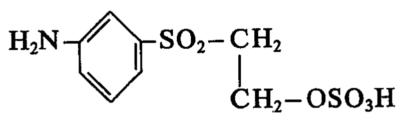 | 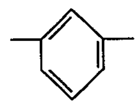 | desgl. | $-OSO_3H$ | 1,5 | 1,5 | 1 | desgl. |
| 37 | 4 | 0 | desgl. | desgl. | desgl. | $-OSO_3H$ | 2 | 2 | 0 | desgl. |
| 38 | 4 | 0 | desgl. | desgl. | desgl. | $-OSO_3H$ | 1 | 3 | 0 | desgl. |
| 39 | 4 | 0 | 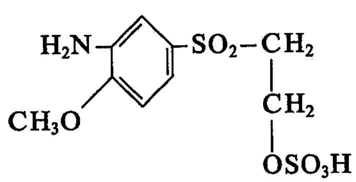 | 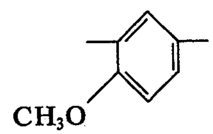 | desgl. | $-OSO_3H$ | 1,5 | 1,5 | 1 | desgl. |
| 40 | 4 | 0 | 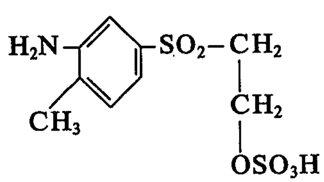 | 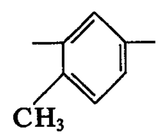 | desgl. | $-OSO_3H$ | 1,5 | 1,5 | 1 | desgl. |
| 41 | 4 | 0 | 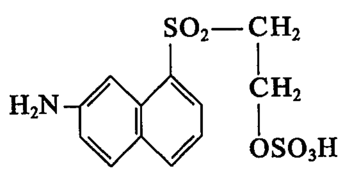 | 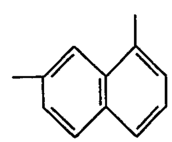 | desgl. | $-OSO_3H$ | 1,5 | 1,5 | 1 | desgl. |

Fortsetzung

| Bei-spiel | Pc-Sulfochlorid (3) | | Amin (4) | Verbindungen entspr. Formel (6) | | | | | | Farbton der Färbung |
|---|---|---|---|---|---|---|---|---|---|---|
| | p | q | | B | D | Z | a | b | c | |
| 42 | 3 | 0 | 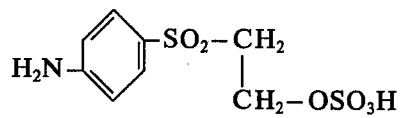 | 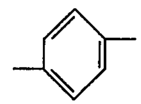 | direkte Bindung | $-OPO_3H_2$ | 1 | 2 | 0 | türkisblau |
| 43 | 4 | 0 | 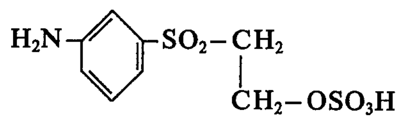 | 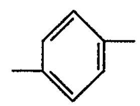 | desgl. | $-S-SO_3H$ | 1 | 2 | 1 | desgl. |
| 44 | 4 | 0 | 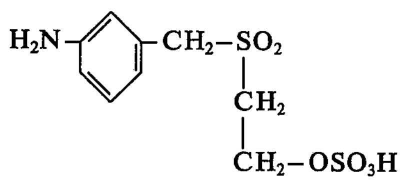 | 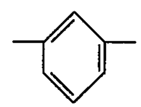 | $-CH_2-$ | $-OSO_3H$ | 2 | 2 | 0 | desgl. |
| 45 | 4 | 0 | 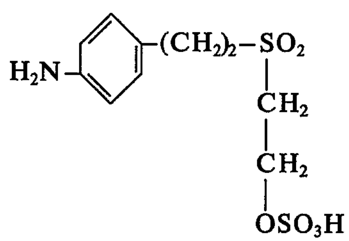 | 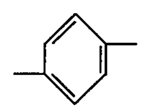 | $-(CH_2)_2-$ | $-OSO_3H$ | 2 | 2 | 0 | desgl. |

## Beispiel 46

43,9 Teile 4-(β-Chloräthylsulfonyl)-anlilin, 8,4 Teile Cyanamid und 67 Teile Natriumhydrogencarbonat werden in 500 Volumenteilen N-Methyl-pyrrolidon eingetragen und verrührt. Anschließend kühlt man dieses Gemisch auf 0 bis 5°C ab und gibt unter Einhaltung dieser Temperatur langsam 97,4 Teile Kupferphthalocyanin-(3)-tetrasulfochlorid in Form eines feuchten Filterkuchens zu. Das Reaktionsgemisch wird sodann noch 8 Stunden bei 0 bis 5°C gerührt, anschließend noch weitere 16 Stunden bei 20 bis 25°C. Sodann verdünnt man das Reaktionsgemisch mit Wasser, fällt die synthetisierte Verbindung durch Zugabe von Salzsäure aus und filtriert. Der feuchte Filterkuchen wird mit Wasser angeteigt und mittels Natriumhydrogencarbonat neutralisiert und anschließend zur Trockne eingedampft. Es wird ein elektrolythaltiges Pulver erhalten, das sich in Wasser mit türkisblauer Farbe sehr gut löst. Es enthält das erfindungsgemäße Natriumsalz der Verbindungen entsprechend folgender formelmäßiger Zusammensetzung

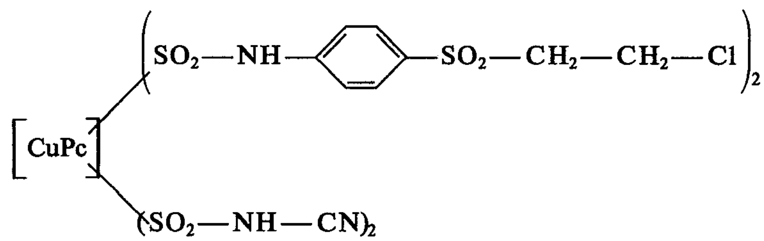

Die erfindungsgemäße Verbindung zeigt sehr gute Farbstoffeigenschaften und liefert auf Baumwolle und Zellwolle nach den für faserreaktive Farbstoffe üblichen Färbe- und Druckverfahren türkisblaue Färbungen und Drucke mit sehr guten Echtheitseigenschaften.

## Beispiel 47

Man verfährt in der im Beispiel 46 angegebenen Verfahrensweise, setzt jedoch anstelle des 4-(β-Chloräthylsulfonyl)-anilins 36,6 Teile 4-Vinylsulfonyl-anilin ein. Man erhält ein erfindungsgemäßes Produkt entsprechend der folgenden formelmäßigen Zusammensetzung

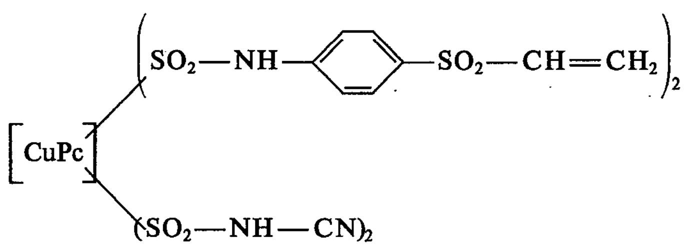

in Form des Natriumsalzes. Auch sie zeigt hervorragende Farbstoffeigenschaften und ergibt nach den in der Technik für faserreaktive Farbstoffe üblichen Applikations- und Fixiermethoden kräftige türkisblaue Färbungen und Drucke mit sehr guten Echtheitseigenschaften.

## Beispiel 48

20 Teile der erfindungsgemäßen Kupferphthalocyaninverbindung von Beispiel 1 mit der Sulfatoäthylsulfonylgruppe werden mit 50 Teilen Harnstoff in 200 Teilen heißem Wasser gelöst. Zu der intensiv türkisblau gefärbten Lösung werden unter Rühren 400 Teile einer aus 40 Teilen Natriumalginat und 960 Teilen Wasser bestehenden Verdickung und 30 Teile Natriumbicarbonat gegeben. Dann wird die Paste mit Wasser und Verdickung auf 1000 Teile eingestellt.

Mit dieser Druckpaste wird ein Baumwollgewebe bedruckt, nach dem Trocknen 5 Minuten bei 101 bis 103°C gedämpft, kalt und heiß mit Wasser gespült, kochend geseift, wieder gespült und getrocknet. Man erhält ein kräftiges türkisblaues Druckmuster, das eine gute Lichtechtheit besitzt und gegenüber Waschbehandlungen sehr gut beständig ist.

## Beispiel 49

Proben des wie im Beispiel 48 bedruckten Baumwollgewebes werden jeweils 10 Sekunden und 30 Sekunden bei 101 bis 103°C gedämpft. Nach dem Waschen der Stoffproben erhält man kräftige

türkisblaue Drucke, die bezüglich Farbtiefe mit dem obigen Druckmuster vergleichbar sind.

Das Beispiel zeigt, daß der erfindungsgemäße Farbstoff für das Kurzdämpf-Druckverfahren geeignet ist.

Beispiel 50

20 Teile der erfindungsgemäßen Kupferphthalocyaninverbindung von Beispiel 1 mit der β-Sulfatoäthylsulfonylgruppe werden mit 50 Teilen Harnstoff in 200 Teilen heißem Wasser gelöst. Dieser Lösung werden unter Rühren 500 Teile einer aus 40 Teilen Alginat, 10 Teilen eines Polyphosphates, 50 Teilen eines Emulgators und 900 Teilen Wasser bestehenden Verdickung zugegeben. Dann wird die Paste mit Wasser und Verdickung auf 1000 Teile eingestellt.

Mit dieser Druckpaste wird ein Baumwollgewebe bedruckt, getrocknet und sodann mit einer Flotte geklotzt, die in einem Liter 180 g Natriumsulfat, 50 g Kaliumcarbonat, 150 g Natriumcarbonat und 100 ml 33%ige Natronlauge enthält. Nach einem Luftgang von 20 bis 40 Sekunden wird die Ware abgelegt oder aufgedockt. Nach einer Verweilzeit von 20 bis 30 Minuten bei einer Temperatur von 20° C wird kalt und heiß mit Wasser gespült, geseift, wieder gespült und getrocknet. Man erhält ein kräftiges türkisblaues Druckmuster von guter Licht- und Waschechtheit.

Das Beispiel zeigt, daß der erfindungsgemäße Farbstoff für das Zweiphasen-Kaltverweil-Verfahren geeignet ist.

Beispiel 51

97 Teile Kupferphthalocyanin-(3)-tetrasulfochlorid werden in Form eines feuchten Filterkuchens in 200 Teilen Wasser verrührt. Man gibt dann 8,4 Teile einer wäßrigen 50%igen Cyanamidlösung hinzu, stellt mit 2n-Natronlauge einen pH-Wert von 12 ein und hält diesen pH-Wert durch weitere Zugabe von 2n-Natronlauge, bis insgesamt 100 Volumenteile dieser wäßrigen 2n-Natronlauge verbraucht sind. Die Temperatur steigt dabei leicht bis auf 23° C an. Mit wäßriger Salzsäure wird sodann dieser Ansatz auf einen pH-Wert von 6 gestellt, und eine neutrale Lösung von 93,3 Teilen 3-Amino-4-methoxy-phenyl-β-sulfatoäthylsulfon und 6,2 Teilen Nicotinsäure in 600 Teilen Wasser wird hinzugefügt. Man erwärmt sodann dieses Reaktionsgemisch auf 45° C und hält durch laufende Zugabe von Natriumbicarbonat einen pH-Wert von 6 ein, bis dieser von selbst konstant bleibt und die Kondensationsreaktion beendet ist. Aus der tiefblauen Lösung erhält man nach Eindampfen etwa 230 Teile eines dunkelblauen, elektrolythaltigen Produktes, das die Natriumsalze der Phthalocyaninverbindungen entsprechend der durchschnittlichen formelmäßigen Zusammensetzung gemäß der Formel

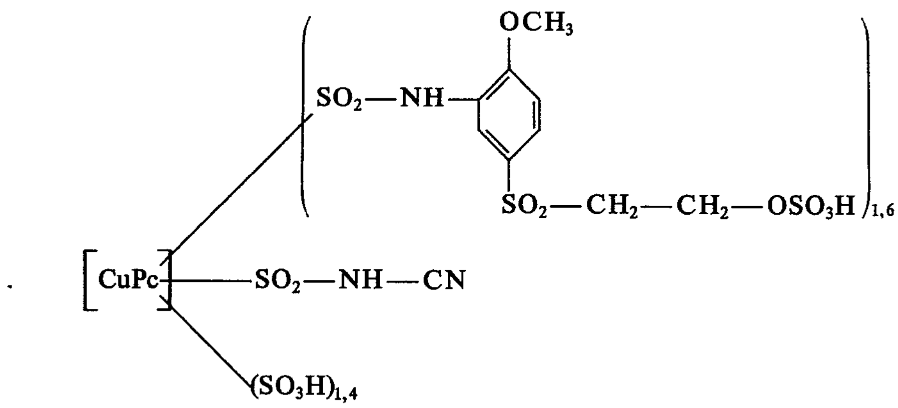

enthält. Dieses Produkt löst sich in Wasser mit blauer Farbe und liefert bei Anwendung nach den für faserreaktive Farbstoffe üblichen und bekannten Applikations- und Fixiermethoden türkisblaue Färbungen und Drucke mit hervorragenden Echtheitseigenschaften, insbesondere sehr guten Licht- und Naßechtheiten, wie beispielsweise Wasch-, Schweiß-, Säure- und Alkaliechtheiten.

Beispiel 52

97 Teile Kupferphthalocyanin-(3)-tetrasulfochlorid werden in Form eines feuchten Filterkuchens in 200 Teilen Wasser verrührt. 16,8 Teile einer wäßrigen 50%igen Cyanamidlösung werden hinzugegeben, die mittels wäßriger 2n-Natronlauge auf einen Wert von 12 gestellt und durch weitere Zugabe von 2n-Natronlauge gehalten wird, bis insgesamt 200 Volumenteile dieser wäßrigen 2n-Natronlauge verbraucht sind. Die Temperatur steigt dabei leicht bis auf 23° C an. Dieser Ansatz wird

sodann mittels wäßriger Salzsäure auf einen pH-Wert von 6 gestellt, und es wird eine neutrale Lösung von 56,2 Teilen 3-Aminophenyl-$\beta$-sulfatoäthylsulfon und 6,2 Teilen Nicotinsäure in 400 Teilen Wasser hinzugegeben. Man erwärmt dieses Reaktionsgemisch sodann auf 45°C und hält den pH-Wert durch laufende Zugabe von Natriumbicarbonat auf 6, bis der pH von selbst konstant bleibt und die Kondensationsreaktion beendet ist. Die tiefblaue Lösung wird eingedampft; man erhält aus ihr etwa 230 Teile eines dunkelblauen, elektrolythaltigen Produktes, das die Natriumsalze der Phthalocyaninverbindungen entsprechend der durchschnittlichen formelmäßigen Zusammensetzung gemäß der Formel

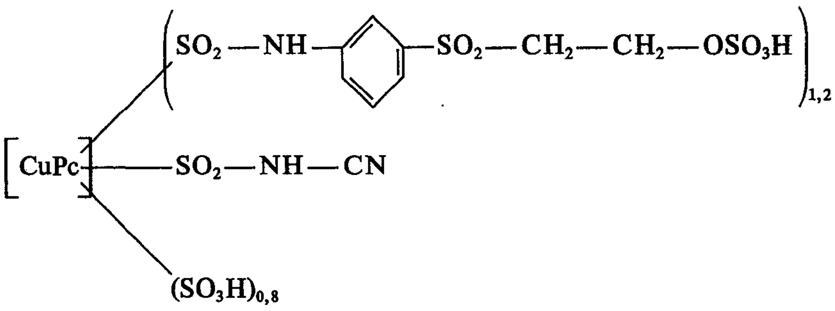

enthält. Dieses Produkt löst sich in Wasser mit blauer Farbe und liefert bei Anwendung nach den für faserreaktive Farbstoffe üblichen und bekannten Applikations- und Fixiermethoden türkisblaue Färbungen und Drucke mit hervorragenden Echtheitseigenschaften, insbesondere sehr guten Licht- und Naßechtheiten, wie beispielsweise Wasch-, Schweiß-, Säure- und Alkaliechtheiten.

**Patentansprüche**

1. Phthalocyaninverbindungen der allgemeinen Formel (1)

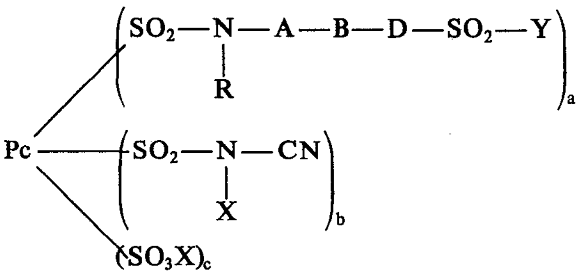

(1)

in welcher bedeuten:

Pc ist der Rest des Kupfer-, Kobalt- oder Nickelphthalocyanins, wobei der Phthalocyaninrest noch in den 3- und/oder 4-Stellungen der carbocyclischen aromatischen Ringe des Phthalocyanins durch Chlor oder Phenyl substituiert sein kann und in welchem die Sulfonylcyanamid-, Sulfonamid- und/oder Sulfonsäure-Gruppen in 3- und/oder 4-Stellungen der carbocyclischen aromatischen Ringe des Phthalocyanins gebunden sind;
a ist eine ganze oder gebrochene Zahl von 1 bis 3;
b ist eine ganze oder gebrochene Zahl von 1 bis 3;
c ist eine ganze oder gebrochene Zahl von Null bis 2,
wobei a, b und c gleich oder verschieden voneinander sein können, jedoch die Summe von (a+b+c) gleich einer ganzen oder gebrochenen Zahl von 2 bis 4 ist;
R ist ein Wasserstoffatom oder eine Alkylgruppe von 1 bis 4 C-Atomen;
A ist eine direkte Bindung oder eine Gruppe der allgemeinen Formeln

$-(CH_2)_m-$ oder $-(CH_2)_n-NH-$,

in welchen m eine ganze Zahl von 1 bis 4 und n eine ganze Zahl von 2 bis 6 ist;
B ist der Phenylen- oder Naphthylenrest, der durch Substituenten, bevorzugt 1 bis 3 Substituenten, aus der Gruppe Alkyl von 1 bis 4 C-Atomen, wie Methyl und Äthyl, Alkoxy von 1 bis 4 C-Atomen, wie Methoxy und Äthoxy, Halogen, wie Chlor und Brom, Carboxy, Sulfo, Carbamoyl, Sulfamoyl, Alkylsulfonyl von 1 bis 4 C-Atomen, Carbalkoxy von 2 bis 5 C-Atomen, Acetylamino und Nitro substituiert sein können;

D ist eine direkte Bindung oder ein Rest der Formeln

$-CH_2-$ oder $-CH_2-CH_2-$;

Y ist die Vinylgruppe oder die β-Sulfatoäthyl-, β-Phosphatoäthyl-, β-Thiosulfatoäthyl-, β-Hydroxyäthyl- oder β-Chloräthyl-Gruppe;

X ist Wasserstoff oder das Äquivalent eines ein-, zwei- oder dreiwertigen Metalls, vorzugsweise des Natriums oder Kaliums.

2. Verfahren zur Herstellung der in Anspruch 1 genannten und definierten Phthalocyaninverbindungen, dadurch gekennzeichnet, daß man eine Verbindung der Formel (3)

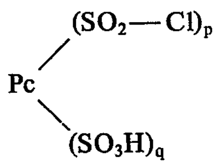

(3)

in welcher Pc die in Anspruch 1 genannte Bedeutung besitzt und p für eine ganze oder gebrochene Zahl von 2 bis 4 steht und q für eine ganze oder gebrochene Zahl von Null bis 2 steht, wobei die Summe von (p + q) eine ganze oder gebrochene Zahl von 2 bis 4 ist, mit einem Amin der allgemeinen Formel (4)

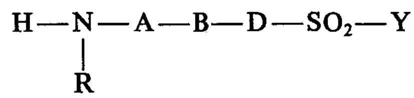

(4)

in welcher R, A, B, D und Y die in Anspruch 1 genannten Bedeutungen haben, und mit Cyanamid gleichzeitig oder in beliebiger Reihenfolge umsetzt und gegebenenfalls, sofern Y für die β-Hydroxyäthylgruppe steht, die so erhaltene Verbindung entsprechend der allgemeinen Formel (1) mit Y der β-Hydroxyäthyl-Gruppe mit einem Sulfatierungsmittel oder Phosphatierungsmittel in die entsprechenden Schwefelsäure- oder Phosphorsäureester der allgemeinen Formel (1) mit Y der β-Sulfatoäthyl- bzw. β-Phosphatoäthyl-Gruppe überführt.

3. Verbindungen nach Anspruch 1 der Formel

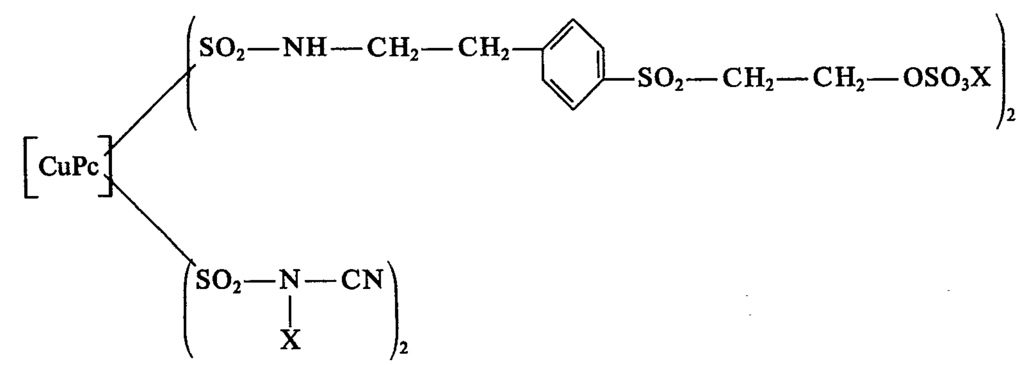

in welcher CuPc den Kupferphthalocyaninrest bedeutet und X die in Anspruch 1 genannte Bedeutung besitzt.

4. Verbindungen nach Anspruch 1 der Formel

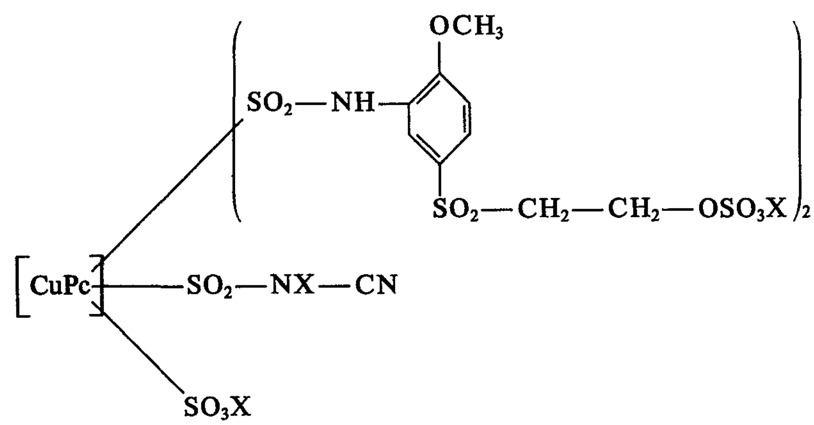

in welcher CuPc den Kupferphthalocyaninrest bedeutet und X die in Anspruch 1 genannte Bedeutung besitzt.

5. Verbindungen nach Anspruch 1 der Formel

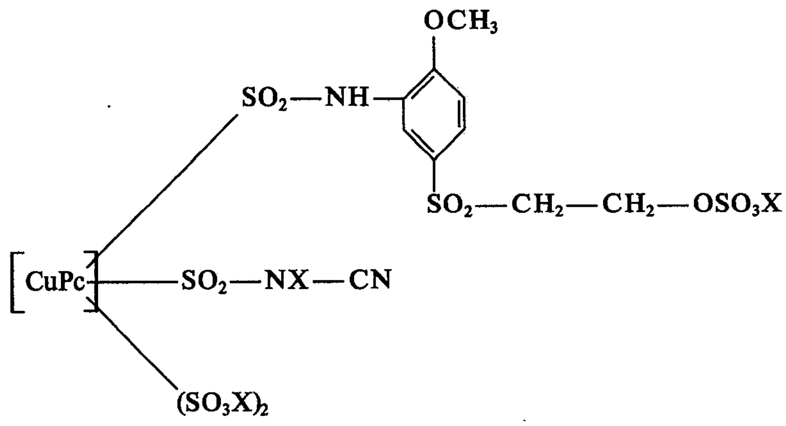

in welcher CuPc den Kupferphthalocyaninrest bedeutet und X die in Anspruch 1 genannte Bedeutung besitzt.

6. Verbindungen nach Anspruch 1 der Formel

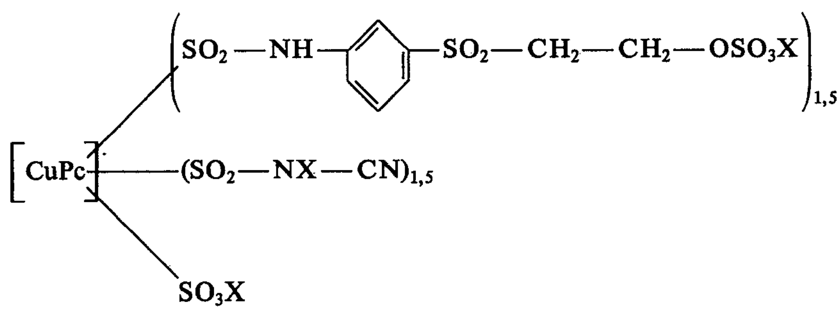

in welcher CuPc den Kupferphthalocyaninrest bedeutet und X die in Anspruch 1 genannte Bedeutung besitzt.

7. Verbindungen nach Anspruch 1 der Formel

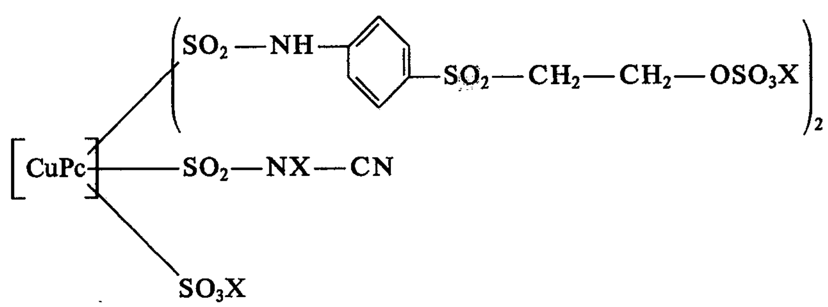

in welcher CuPc den Kupferphthalocyaninrest bedeutet und X die in Anspruch 1 genannte Bedeutung besitzt.

8. Verbindungen nach Anspruch 1 der Formel

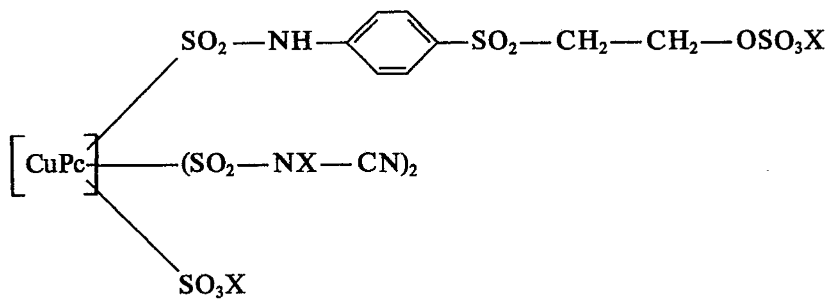

in welcher CuPc den Kupferphthalocyaninrest bedeutet und X die in Anspruch 1 genannte Bedeutung besitzt.

9. Verbindungen nach Anspruch 1 der Formel

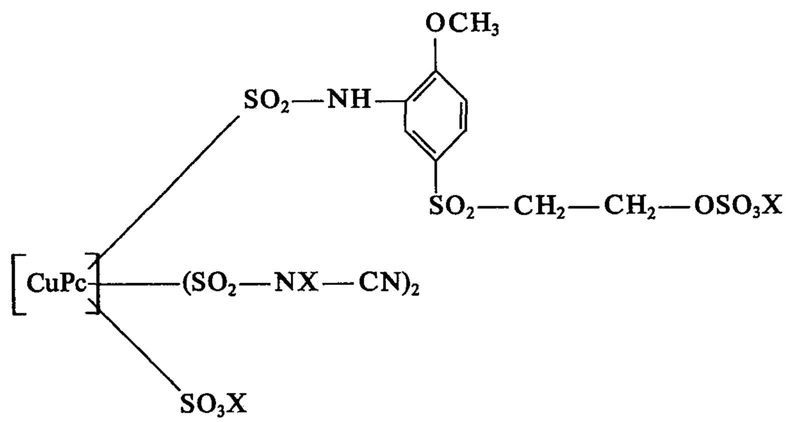

in welcher CuPc den Kupferphthalocyaninrest bedeutet und X die in Anspruch 1 genannte Bedeutung besitzt.

10. Verwendung der in Anspruch 1 genannten und definierten Phthalocyaninverbindungen der allgemeinen Formel (1) oder der nach Anspruch 2 hergestellten Phthalocyaninverbindungen als Farbstoffe zum Färben (einschließlich Bedrucken) von Materialien, die natürliche oder regenerierte Cellulose, Seide, Wolle oder synthetische Polyamidfasern enthalten oder daraus bestehen.

**Claims**

1. Phthalocyanine compounds of the general formula (1)

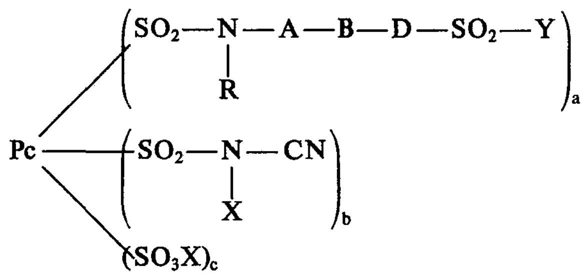

(1)

wherein:

- Pc is the radical of the copper-, cobalt- or nickel-phthalocyanine in which the phthalocyanine radical can additionally be substituted by chlorine or phenyl in the 3- and/or 4-positions of the carbocyclic aromatic rings of the phthalocyanine and in which the sulfonylcyanamide, sulfonamide and/or sulfonic acid groups are linked in the 3- and/or 4-positions of the carbocyclic aromatic rings of the phthalocyanine;
- a is a whole or fractional number of 1 to 3;
- b is a whole or fractional number of 1 to 3;
- c is a whole or fractional number of zero to 2,

a, b and c being identical or different from one another, but the total of (a + b + c) is equal to a whole or fractional number of 2 to 4;

R is a hydrogen atom or an alkyl group of 1 to 4 C-atoms;

A is a direct bond or a group of the general formulae

$$-(CH_2)_m- \text{ or } -(CH_2)_n-NH-,$$

in which m is a whole number of 1 to 4 and n is a whole number of 2 to 6;

B is the phenylene or naphthylene radical, which can be substituted by substituents, preferably 1 to 3 substituents, belonging to the group comprising alkyl of 1 to 4 C-Atoms, such as methyl and ethyl, alkoxy of 1 to 4 C-atoms, such as methoxy and ethoxy, halogen, such as chlorine and bromine, carboxy, sulfo, carbamoyl, sulfamoyl, alkylsulfonyl of 1 to 4 C-atoms, carboalkoxy of 2 to 5 C-atoms, acetylamino and nitro;

D is a direct bond or a radical of the formulae

$$-CH_2- \text{ or } -CH_2-CH_2-;$$

Y is the vinyl group or the β-sulfatoethyl, β-phospatoethyl, β-thiosulfatoethyl, β-hydroxyethyl or β-chloroethyl group;

X is hydrogen or the equivalent of a monovalent, bivalent or trivalent metal, preferably of sodium or potassium.

2. A process for the manufacture of the phthalocyanine compounds mentioned and defined in claim 1, characterized in that a compound of the formula (3)

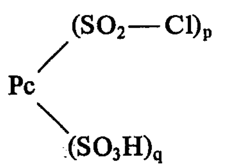

(3)

in which Pc has the meaning mentioned in claim 1 and p is a whole or fractional number of 2 to 4 and q represents a whole or fractional number of zero to 2, the total of (p + q) being a whole or fractional number of 2 to 4, is reacted, simultaneously or in any desired sequence, with an amine of the general formula (4)

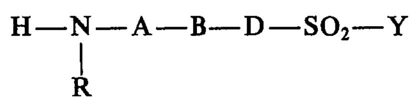

(4)

in which R, A, B, D and Y have the meanings mentioned in claim 1, and with cyanamide, and, provided that Y represents the β-hydroxyethyl group, the compound thus obtained corresponding to the general formula (1) in which Y is the β-hydroxyethyl group, is optionally converted by means of a sulfating or phosphating agent into the corresponding sulfuric acid- or phosphoric acid esters, respectively, of the general formula (1) in which Y is the β-sulfatoethyl group or the β-phosphatoethyl group, respectively.

3. Compounds according to claim 1 of the formula

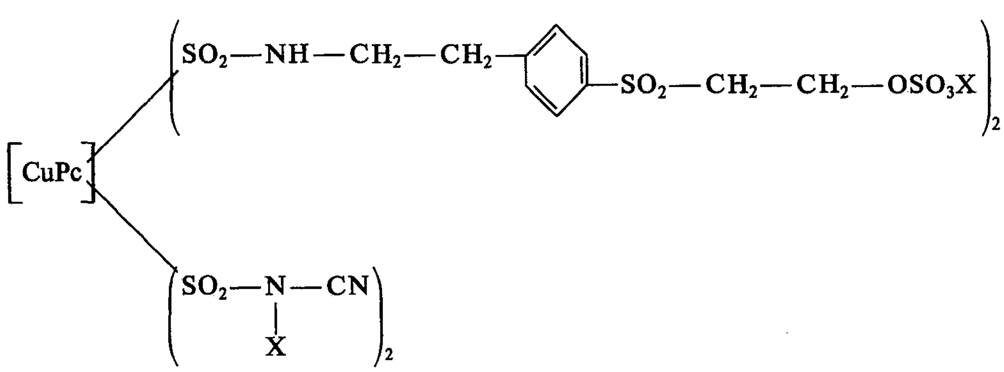

in which CuPc denotes the copper phthalocyanine radical and X has the meaning mentioned in claim 1.

4. Compounds according to claim 1 of the formula

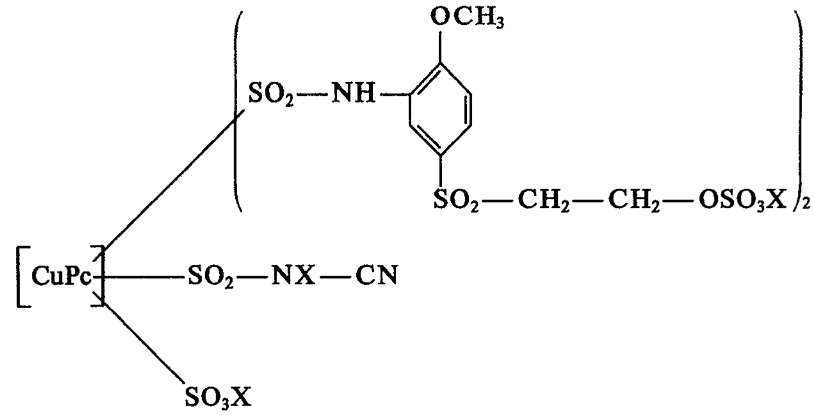

in which CuPc denotes the copper phthalocyanine radical and X has the meaning mentioned in claim 1.

5. Compounds according to claim 1 of the formula

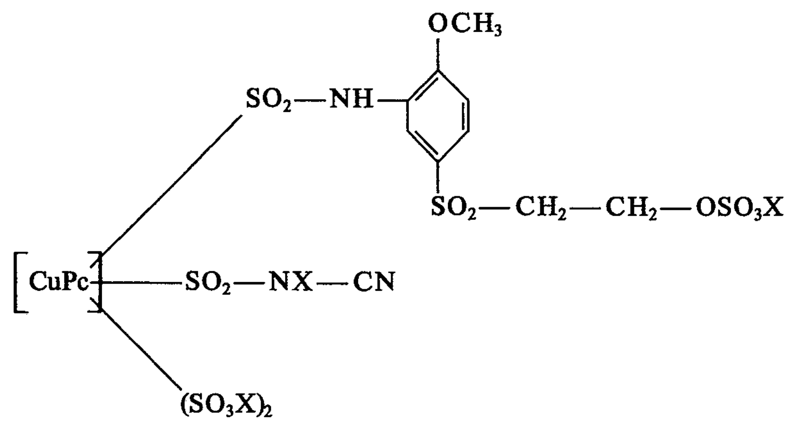

in which CuPc denotes the copper phthalocyanine radical an X has the meaning mentioned in claim 1.

6. Compounds according to claim 1 of the formula

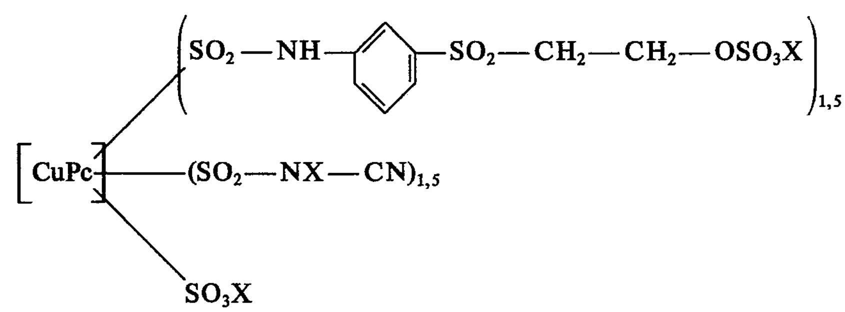

in which CuPc denotes the copper phthalocyanine radical and X has the meaning mentioned in claim 1.

7. Compounds according to claim 1 of the formula

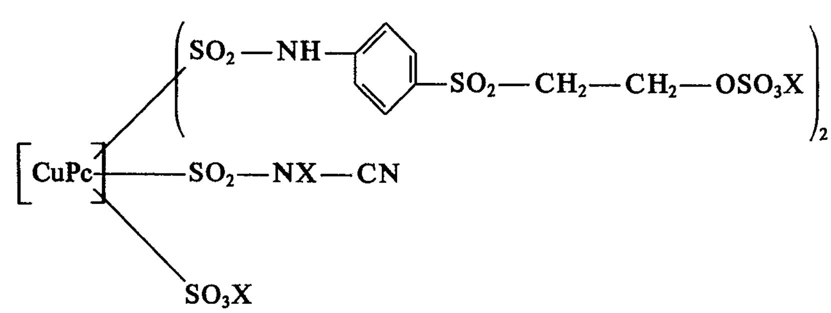

in which CuPc denotes the copper phthalocyanine radical and X has the meaning mentioned in claim 1.

8. Compounds according to claim 1 of the formula

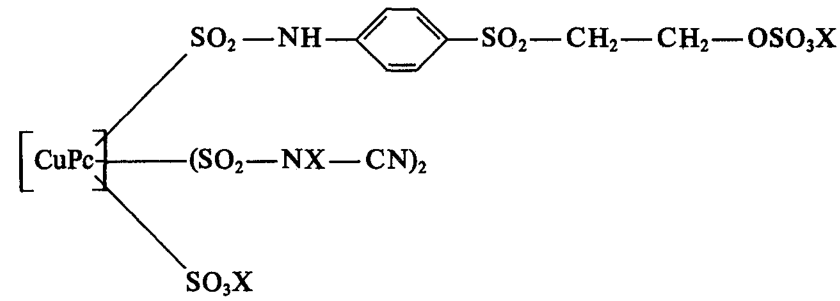

in which CuPc denotes the copper phthalocyanine radical and X has the meaning mentioned in claim 1.

9. Compounds according to claim 1 of the formula

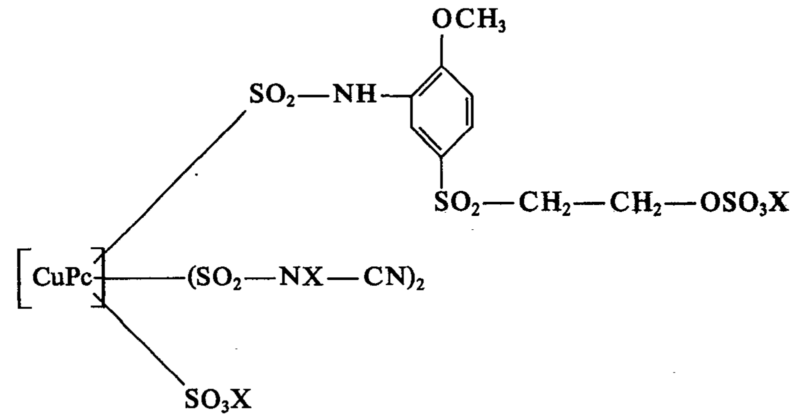

in which CuPc denotes the copper phthalocyanine radical and X has the meaning mentioned in claim 1.

10. Use of the phthalocyanine compounds of the general formula (1) mentioned and defined in claim 1, or of the phthalocyanine compounds prepared according to claim 2, as dyestuffs for dyeing (including printing) materials consisting of or containing natural or regenerated cellulose, silk, wool or synthetic polyamide fibers.

**Revendications**

1. Composés de la phthalocyanine, de formule générale (1)

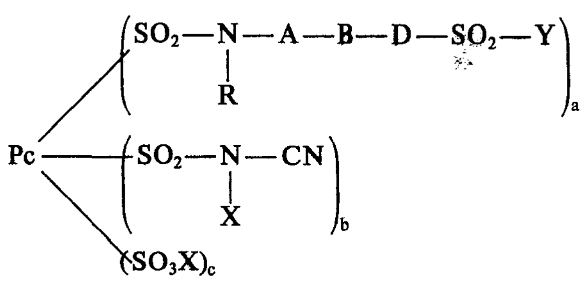

(1)

caractérisés en ce que:

Pc est le radical de la phtalocyanine de cuivre, de cobalt ou de nickel, le radical phtalocyanine pouvant encore être substitué par le chlore ou le phényle sur les positions 3 et/ou 4 des cycles aromatiques carbocycliques de la phtalocyanine, ou dans lequel les groupes sulfonylcyanamido, sulfonamido et/ou acide sulfonique peuvent être fixés sur les positions 3 et/ou 4 des cycles aromatiques carbocycliques de la phtalocyanine;
a est un nombre entier ou fractionnaire compris entre 1 et 3;
b est un nombre entier ou fractionnaire compris entre 1 et 3;
c est un nombre entier ou fractionnaire compris entre 0 et 2,
où a, b et c peuvent être identiques ou différents, la somme (a+b+c) étant toutefois égale à un nombre entier ou fractionnaire compris entre 2 et 4;

R est un atome d'hydrogène ou un groupe alkyle à 1 à 4 atomes de carbone;
A est une liaison directe ou un groupe de formule générale

$$-(CH_2)_m- \text{ ou } -(CH_2)_n-NH-,$$

où m est nombre entier compris entre 1 et 4 et n est un nombre entier compris entre 2 et 6;
B est le radical phénylène ou naphtylène, qui peut être substitué par des substituants, de préférence 1 à 3 substituants, choisis dans le groupe comprenant les radicaux alkyle à 1 à 4 atomes de carbone, par exemple méthyle et éthyle, les radicaux alcoxy à 1 à 4 atomes de carbone, par exemple méthoxy et éthoxy, les halogènes, comme le chlore et le brome, les radicaux carboxy, sulfo, carbamoyle, sulfamoyle, les radicaux alkylsulfonyle à 1 à 4 atomes de carbone, carbalcoxy à 2 à 5 atomes de carbone, acétylamino et nitro;
D est une liaison directe ou un radical de formule

$$-CH_2- \text{ ou } -CH_2-CH_2-;$$

Y est le groupe vinyle ou le groupe β-sulfatoéthyle, β-phosphatoéthyle, β-thiosulfatoéthyle, β-hydroxyéthyle ou β-chloréthyle;
X est l'hydrogène ou l'équivalent d'un métal mono, bi ou trivalent, de préférence le sodium ou le potassium.

2. Procédé de préparation des composés de la phtalocyanine mentionnés et définis dans la revendication 1, caractérisé en ce qu'on fait réagir, simultanément ou dans un ordre quelconque, un composé de formule (3)

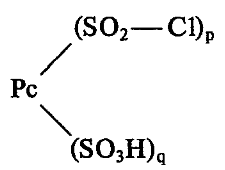

(3)

où Pc a la signification donnée dans la revendication 1, p est un nombre entier ou fractionnaire compris entre 2 et 4 et q est un nombre ou fractionnaire compris entre 0 et 2, la somme (p+q) étant un nombre entier ou fractionnaire compris entre 2 et 4, sur une amine de formule générale (4)

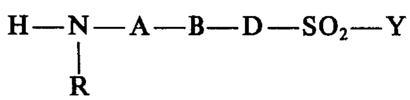

(4)

où R, A, B, D et Y ont la signification donnée dans la revendication 1, et sur du cyanamide, et que, le cas échéant, dans la mesure où Y est le groupe β-hydroxyéthyle, on transforme le composé ainsi obtenu, correspondant à la formule générale (1) où Y est le groupe β-hydroxyéthyle, à l'aide d'un agent de sulfatation ou de phosphatation, en les esters correspondants de l'acide sulfurique ou de l'acide phosphorique de formule générale (1) où Y est le groupe β-sulfatoéthyle ou β-phosphatoéthyle.

3. Composés selon la revendication 1, de formule

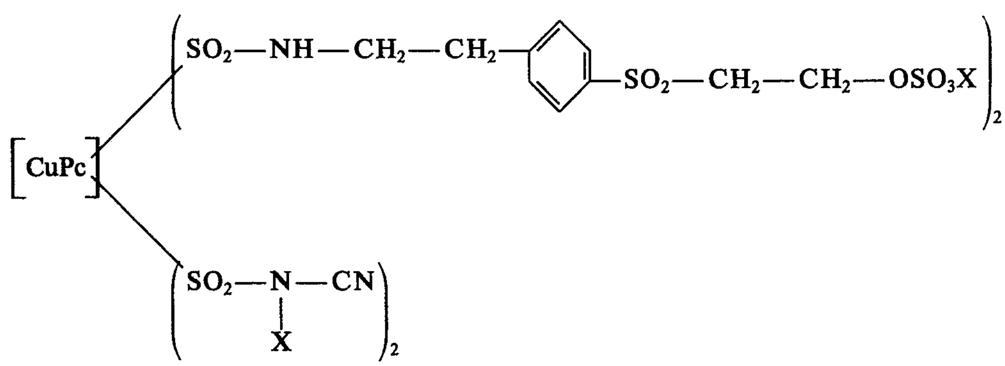

où CuPc est le radical phtalocyanine de cuivre et X a la signification donnée dans la revendication 1.

4. Composés selon la revendication 1, de formule

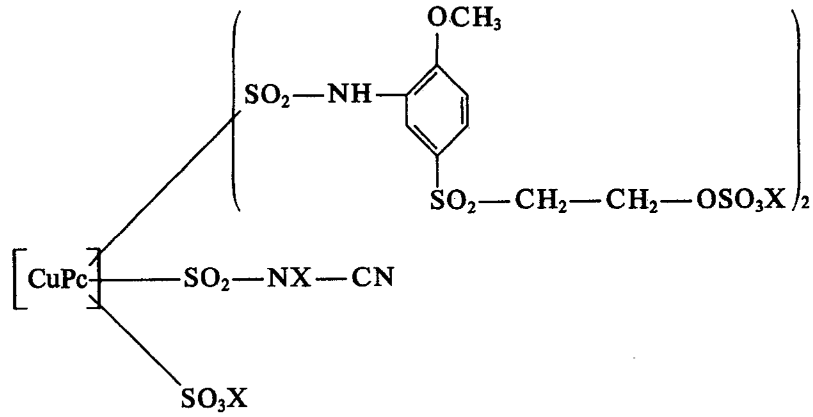

où CuPc est le radical phtalocyanine de cuivre et X a la signification donnée dans la revendication 1.

5. Composés selon la revendication 1, de formule

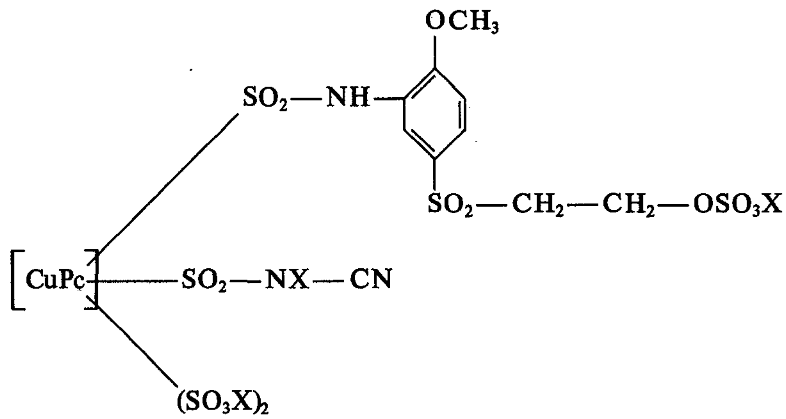

où CuPc est le radical phtalocyanine de cuivre et X a la signification donnée dans la revendication 1.

6. Composés selon la revendication 1, de formule

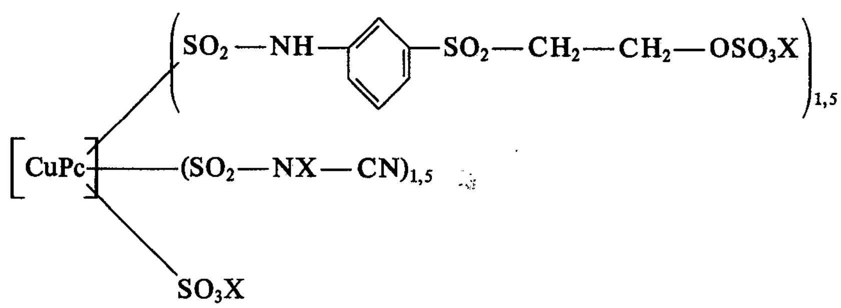

où CuPc est le radical phtalocyanine de cuivre et X a la signification donnée dans la revendication 1.

7. Composés selon la revendication 1, de formule

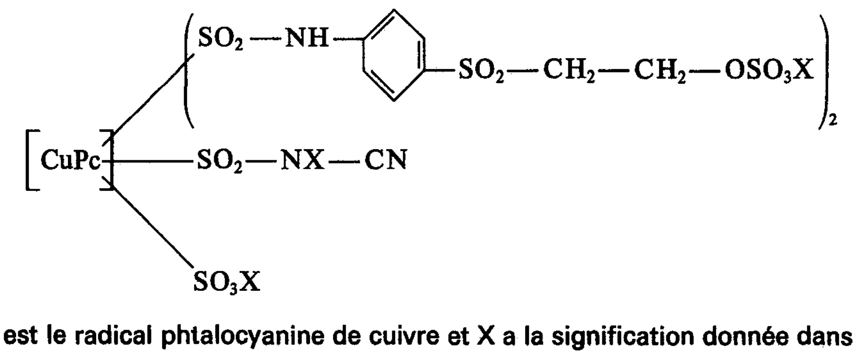

où CuPc est le radical phtalocyanine de cuivre et X a la signification donnée dans la revendication 1.

8. Composés selon la revendication 1, de formule

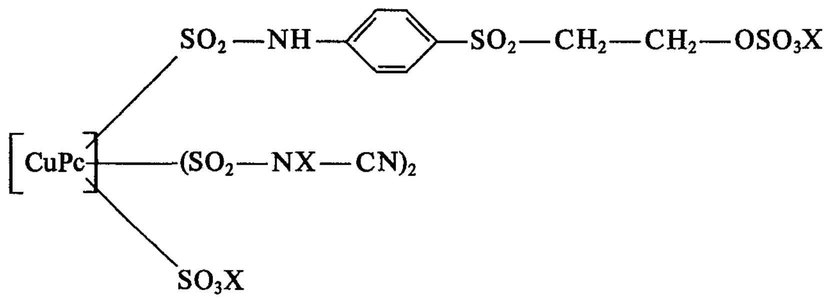

où CuPc est le radical phtalocyanine de cuivre et X a la signification donnée dans la revendication 1.

9. Composés selon la revendication 1, de formule

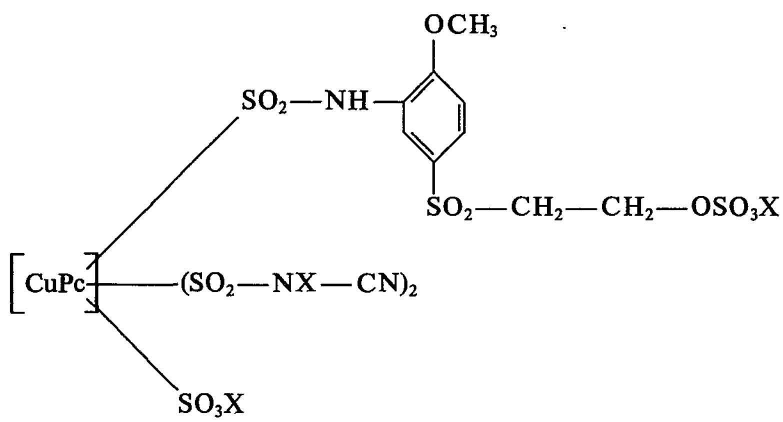

où CuPc est le radical phtalocyanine de cuivre et X a la signification donnée dans la revendication 1.

10. Utilisation des composés de la phtalocyanine définis et mentionnés dans la revendication 1, de formule générale (1), ou des composés de la phtalocyanine préparés selon la revendication 2, en tant que colorants pour la teinture (y compris l'impression) de matières contenant de la cellulose naturelle ou régénérée, de la soie, de la laine ou des fibres de polyamide synthétique, ou en étant composées.